# EUROPÄISCHE PATENTSCHRIFT

(11) **EP 3 084 251 B1**
(45) Veröffentlichungstag und Bekanntmachung des Hinweises auf die Patenterteilung: **31.01.2018**
(21) Anmeldenummer: 14816116.9
(22) Anmeldetag: 10.11.2014
(51) Int. Cl.: F16D 23/14

(54) **KUPPLUNGSDECKELLAGER**
CLUTCH COVER BEARING
PALIER DE COUVERCLE D'EMBRAYAGE

(30) Priorität: 17.12.2013 DE 102013226165
(43) Veröffentlichungstag der Anmeldung: 26.10.2016
(73) Patentinhaber: Schaeffler Technologies AG & Co. KG, 91074 Herzogenaurach (DE)
(72) Erfinder: SESTER, Christof, 77723 Gengenbach (DE); KRAHTOV, Luben, 76530 Baden-Baden (DE); NOLL, Dominik, 77652 Offenburg (DE); OSER, Johannes, 77855 Achern (DE)
(86) Internationale Anmeldenummer: PCT/DE2014/200623
(87) Internationale Veröffentlichungsnummer: WO 2015/090301

(56) Entgegenhaltungen:
- DE-A1- 2 944 648
- DE-A1- 10 148 388
- DE-A1-102008 012 815

## Beschreibung

Die Erfindung betrifft ein als Schrägkugellager ausgebildetes Kupplungsdeckellager, welches zur Kraftabstützung einer Schalttrennkupplung geeignet ist.

Ein Kupplungsausrücksystem für eine aus zwei Teilkupplungen bestehende Doppelkupplung eines Fahrzeugs ist zum Beispiel aus der DE 10 2009 056 380 A1 bekannt. Jeder Teilkupplung ist hierbei ein in einem gemeinsamen Gehäuse angeordneter und geführter ringförmiger Kolben zugeordnet, wobei an einem Ende eines jeden Ringkolbens jeweils ein ringförmiges Dichtelement angebracht ist.

Der Erfindung liegt die Aufgabe zugrunde, ein Kupplungsdeckellager gegenüber dem genannten Stand der Technik sowohl hinsichtlich Montagefreundlichkeit und Unempfindlichkeit gegenüber eventuellen Einwirkungen beim Transport als auch hinsichtlich der Abdichtung des Lagers weiterzuentwickeln.

Diese Aufgabe wird erfindungsgemäß gelöst durch ein Kupplungsdeckellager mit den Merkmalen des Anspruchs 1. Das Kupplungsdeckellager ist in an sich bekanntem Grundaufbau als Schrägkugellager ausgebildet, wobei Wälzkörper, nämlich Kugeln, zwischen einem inneren und einem äußeren Lagerring abrollen. Der Ringraum, in welchem die Kugeln angeordnet sind, ist durch zwei innere Dichtungen abgedichtet, welche jeweils in einem der Lagerringe geklemmt sind und unterschiedlich dimensioniert sind. Die beiden inneren Dichtungen liegen in zueinander parallelen Ebenen, welche zur Rotationsachse des Kupplungsdeckellagers, das heißt zur Symmetrieachse der Lagerringe, normal angeordnet sind. Der innere Lagerring des Kupplungsdeckellagers ist drehfest auf einer Welle angeordnet, auf welcher weiterhin eine Schutzscheibe gehalten ist, die der inneren Dichtung kleineren Durchmessers in Axialrichtung des Ausrücklagers vorgelagert ist. Die Schutzscheibe überragt die innere Dichtung kleineren Durchmessers in Radialrichtung nach außen, wobei zwischen einem radial äußeren Bereich der Schutzscheibe und dem äußeren Lagerring ein Ringspalt gebildet ist.

Die auf der Welle befestigte Schutzscheibe erfüllt zwei Funktionen: Zum einen fungiert sie als nicht berührende Dichtung, insbesondere Labyrinthdichtung; zum anderen begrenzt die Schutzscheibe die Beweglichkeit des Außenrings des Schrägkugellagers relativ zum Innenring in axialer Richtung und stellt damit einen Demontageschutz dar. Insbesondere ist durch die Schutzscheibe eine Sicherung gebildet, die verhindert, dass sich Teile des Kupplungsdeckellagers bei dessen Transport, etwa durch Erschütterungen, voneinander lösen.

Die Erfindung geht von der Überlegung aus, dass das kalte Fügen der Lagerringe eines Schrägkugellagers prinzipiell ein rationelles Montageverfahren darstellt. Nachteilig an diesem Montageverfahren ist jedoch, dass das ohne Erwärmung von Bauteilen zusammengesetzte Schrägkugellager in der Regel keine Sicherung gegen starke Verschiebung der Lagerringe zueinander in axialer Richtung aufweist. Um eine solche Sicherung, zumindest mit eingeschränkter Funktionalität, auszubilden, ist es prinzipiell möglich, an den Lagerringen den jeweiligen Laufbahnen benachbarte Schultern auszubilden, die nicht auf einfache Weise von den Kugeln überrollt werden können. Derartige als Demontageschutz dienende Schultern erschweren jedoch nicht nur ein Auseinanderfallen der Lagerteile, sondern auch die Montage des Lagers. Weiterhin ist nachteilig, dass ein unbeabsichtigtes und unsachgemäßes Überrollen einer Schulter eines Schrägkugellagers, welches beispielsweise durch starke Vibrationen auslösbar ist und auch als Ausknüpfen des Lagers bezeichnet wird, zu einer Schädigung der Wälzkörper und/oder Lagerringe führen kann.

Um ein gegen Auseinanderfallen gesichertes Schrägkugellager mit ein Ausknüpfen des Lagers zuverlässig verhindernden, deutlich ausgeprägten Schultern an den Lagerringen zu montieren, ist daher typischerweise eine Warmmontage erforderlich.

Die Erfindung zeigt in grundsätzlicher Abkehr von diesem gängigen Montageverfahren einen Weg auf, ein Schrägkugellager, nämlich Kupplungsdeckellager, zu montieren, ohne für Montagezwecke einen Temperaturunterschied zwischen miteinander zu fügenden Einzelteilen herzustellen.

Die bei dem erfindungsgemäßen Kupplungsdeckellager vorgesehene, eine Mehrfachfunktion erfüllende Schutzscheibe ist besonders rationell als Blechteil herstellbar. Aufgrund der Gestaltung der Schutzscheibe als nicht berührende Dichtung ist ein zusätzlicher Wärmeeintrag in das Lager durch einen Gleitkontakt prinzipbedingt ausgeschlossen.

Die den Lagerringen des Schrägkugellagers in Axialrichtung vorgesetzte Schutzscheibe weist in vorteilhafter Ausgestaltung in mindestens eine Ausnehmung am Umfang der Welle eingreifende Schnapphaken auf. Hierbei können die Schnapphaken beispielsweise in eine umlaufende Nut, welche sich in der Welle befindet, eingreifen. Alternativ kann die Welle an ihren Umfang einzelne Vertiefungen aufweisen, in welche jeweils ein Schnapphaken eingreift.

Die in die Nut beziehungsweise einzelne Ausnehmungen an der Oberfläche der Welle eingreifenden Enden der insgesamt einfedernde Eigenschaften aufweisenden Schnapphaken sind vorzugsweise in Axialrichtung der Lagerringe etwas von deren Stirnseite beabstandet, wobei ein parallel zur Oberfläche der Welle liegender Abschnitt eines jeden Schnapphakens auf dessen der Stirnseite des inneren Lagerrings zugewandter Seite in einen inneren Flanschabschnitt der Schutzscheibe übergeht. Der innere Flanschabschnitt der Schutzscheibe liegt hierbei vorzugsweise direkt an der Stirnseite des inneren Lagerrings an. Um einen ausreichenden Abstand zwischen der Schutzscheibe und der inneren Dichtung kleineren Durchmessers des Schrägkugellagers herzustellen, ist ein mittlerer Flanschabschnitt der Schutzscheibe gegenüber dem inneren Flanschabschnitt vorzugsweise in Axialrichtung nach außen, das heißt von den Lagerringen weg, versetzt.

Ein konischer Übergangsabschnitt zwischen dem inneren Flanschabschnitt und dem mittleren Flanschabschnitt stellt sicher, dass auch der radial innenliegende Rand der Dichtung kleineren Durchmessers beim Transport sowie Betrieb des Kupplungsdeckellagers stets von der Schutzscheibe beabstandet bleibt. Somit bleibt die der Schutzscheibe benachbarte innere Dichtung, welche ebenso wie die zweite, größere innere Dichtung bevorzugt als berührende oder fliehkraftabhebende Dichtung ausgebildet ist, vor Beschädigungen, auch bei beispielsweise während des Transports in nicht beabsichtigter Weise auf das Kupplungsdeckellager einwirkenden stoßartigen axialen Belastungen, geschützt. Zum Schutz der inneren Dichtungen trägt maßgeblich auch die Tatsache bei, dass in jeglichen Phasen während des Transports, des Einbaus und des späteren Betriebs des Kupplungsdeckellagers ein nennenswerter axialer Versatz zwischen den beiden Lagerringen des Ausrücklagers durch die Schutzscheibe ausgeschlossen wird. Weiterhin wird durch die Schutzscheibe ein Überrollen eventueller Schultern an den Lagerringen durch die Wälzkörper zuverlässig verhindert.

Der radial äußerste Bereich der Schutzscheibe ist in bevorzugter Ausgestaltung durch einen äußeren Flanschabschnitt gebildet, welcher axial zwischen dem inneren Flanschabschnitt und dem mittleren Flanschabschnitt angeordnet ist, sodass der Ringspalt definierter Breite zwischen dem äußeren Flanschabschnitt und einer Stirnseite des äußeren Lagerrings gebildet ist. Die drei genannten Flanschabschnitt der Schutzscheibe liegen damit in voneinander getrennten, jeweils zur Rotationsachse des Kupplungsdeckellagers parallelen Ebenen.

Das Kupplungsdeckellager ist insbesondere für die Verwendung in einer Doppelkupplung geeignet. Ebenso kann das Kupplungsdeckellager in eine einfache, manuell oder automatisiert bedienbare Kupplung eingebaut sein.

Nachfolgend wird ein Ausführungsbeispiel der Erfindung anhand einer Zeichnung näher erläutert. Hierin zeigen:
- Fig. 1: ein Kupplungsdeckellager mit Schutzscheibe in einer Schnittdarstellung,
- Fig. 2: die Schutzscheibe der Anordnung nach Fig. 1.

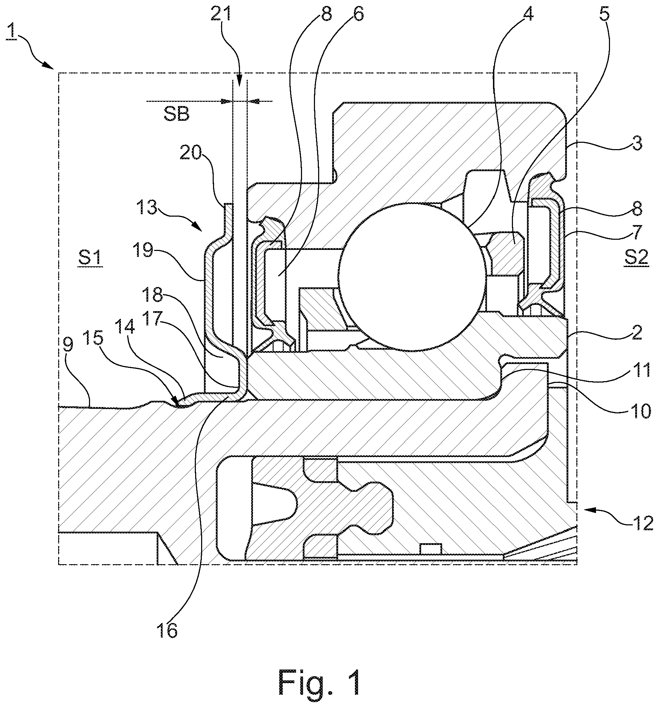

Ein in Fig. 1 im Schnitt dargestelltes, insgesamt mit dem Bezugszeichen 1 gekennzeichnetes Kupplungsdeckellager ist als Schrägkugellager ausgebildet und Teil einer Doppelkupplung, hinsichtlich deren Funktion auf den eingangs genannten Stand der Technik verwiesen wird.

Das Kupplungsdeckellager 1 umfasst zwei Lagerringe 2,3 nämlich einen inneren Lagerring 2 und einen äußeren Lagerring 3, zwischen welchen Kugeln 4 als Wälzkörper abrollen. Die Kugeln 4 sind in einem als Fensterkäfig gestalteten Wälzlagerkäfig 5 geführt, welcher aus Kunststoff oder Metall gefertigt ist. Zwischen den Lagerringen 2,3 sind zwei innere Dichtungen 6,7 unterschiedlichen Durchmessers angeordnet, wobei die in der Anordnung nach Fig. 1 linke Dichtung 6 kleiner und die in der Anordnung nach Fig. 1 rechte Dichtung 7 größer dimensioniert ist. Beide inneren Dichtungen 6,7 weisen jeweils einen Metallkern 8 auf und sind im äußeren Lagerring 3 gehalten, während jeweils mindestens eine Dichtlippe einer jeden Dichtung 6,7 den inneren Lagerring 2 kontaktiert.

Der innere Lagerring 2 ist auf eine Welle 9 aufgesetzt und drehfest mit dieser verbunden. Auf der in der Anordnung nach Fig. 1 rechten, im Bereich der inneren Dichtung 7 angeordneten Seite des Kupplungsdeckellagers 1 weist die Welle 9 einen nach außen gerichteten Bord 10 auf, an welchem ein Absatz 11 des Innenrings 2 anliegt. Eine hydraulisch betätigbare Aktorik 12 zur Verschiebung der Welle 9 ist in Fig. 1 nur andeutungsweise dargestellt.

Um eine Verlagerung des Außenrings 3 in axialer Richtung, in der Anordnung nach Fig. 1 nach links, zu verhindern, ist auf die Welle 9 eine Schutzscheibe 13 aus Blech aufgesetzt, welche an einer ersten Stirnseite S1 des Kupplungsdeckellagers 1 am inneren Lagerring 2 anliegt. Als erste Stirnseite S1 wird hierbei diejenige Stirnseite des Kupplungsdeckellagers verstanden, an welcher sich die kleinere innere Dichtung 6 befindet. Mit S2 wird dagegen diejenige Stirnseite des Kupplungsdeckellagers 1 bezeichnet, an welcher sich der Bord 10 der Welle 9 sowie die innere Dichtung 7 größeren Durchmessers befindet.

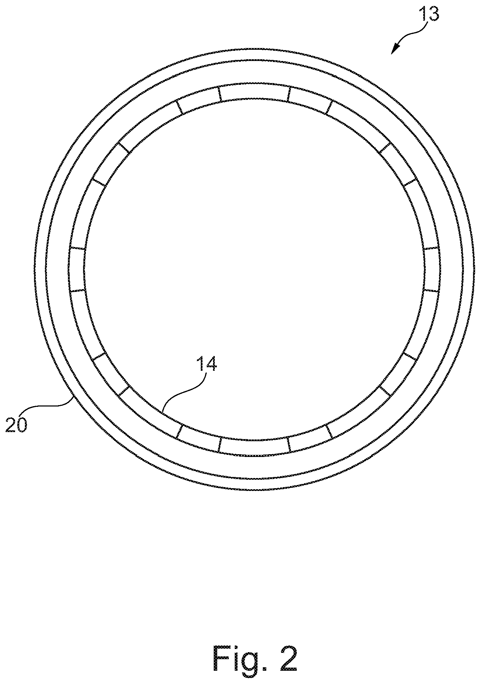

Die in Fig. 2 isoliert dargestellte Schutzscheibe 13 ist als spanlos umgeformtes Teil aus Stahlblech hergestellt. Am inneren Rand der Schutzscheibe 13 befinden sich mehrere nach innen ragende Schnapphaken 14, welche in Ausnehmungen 15 am Umfang der Welle 9 eingreifen. Zum inneren Lagerring 2 hin verläuft jeder Schnapphaken 14, ausgehend von seinem in die Ausnehmung 15 eingreifenden Ende, parallel zur Oberfläche der Welle 9, wobei die entsprechenden, auf einem konzentrisch um die Welle 9 gelegten Zylinder liegenden Abschnitte der Schutzscheibe 13 mit dem Bezugszeichen 16 gekennzeichnet sind. An der Stirnseite S1 des inneren Lagerrings 2 gehen die Abschnitte 16 der Schutzscheibe 13 in einen inneren Flanschabschnitt 17 über, welcher direkt am inneren Lagerring 2 anliegt. Die Schutzscheibe 13 stellt somit, ebenso wie der Bord 10, eine Sicherung gegen axiale Verschiebung des inneren Lagerring 2 auf der Welle 9 dar. In radialer Richtung erstreckt sich der innere Flanschabschnitt 17 etwa über den gleichen Bereich wie der innere Lagerring 2 an dessen Stirnseite S1.

An den inneren Flanschabschnitt 17 der Schutzscheibe 13 schließt sich radial nach außen ein konischer Übergangsabschnitt 18 auf, welcher an seinem radial äußeren Rand in einen mittleren Flanschabschnitt 19 übergeht, der in einer parallel zum inneren Flanschabschnitt 17 liegenden Ebene angeordnet ist. Im Vergleich zum inneren Flanschabschnitt 17 ist der mittlere Flanschabschnitt 19 deutlich weiter von der Stirnseite S1 des inneren Lagerrings 2 beabstandet, jedoch nicht so weit wie die Ausnehmungen 15, in welche die Schnapphaken 14 der Schutzscheibe 13 eingreifen. Der axiale Abstand zwischen dem inneren Flanschabschnitt 17 und dem mittleren Flanschabschnitt 19 sorgt zum einen für einen ausreichenden Abstand zwischen der Schutzscheibe 13 und der inneren Dichtung 6, welcher auch im konischen Übergangsabschnitt 18 gegeben ist. Zum anderen ist durch die axial gegeneinander versetzten Ebenen, in welchen sich die Flanschabschnitte 17,19 befinden, die Stabilität der Schutzscheibe 13 erhöht.

Der radial äußere Rand der Schutzscheibe 13 wird gebildet durch einen äußeren Flanschabschnitt 20, welcher axial in einer Ebene zwischen dem inneren Flanschabschnitt 17 und dem mittleren Flanschabschnitt 19 liegt. Zwischen dem äußeren Flanschabschnitt 20 und der Stirnseite S1 des äußeren Lagerrings 3 ist ein Ringspalt 21 einer Spaltbreite SB gebildet, welcher als nicht berührende Dichtung, die der inneren Dichtung 6 vorgesetzt ist, fungiert.

### Bezugszeichenliste

- SB: Spaltbreite
- S1: Stirnseite
- S2: Stirnseite

- 1: Kupplungsdeckellager
- 2: innerer Lagerring
- 3: äußerer Lagerring
- 4: Kugel, Wälzkörper
- 5: Wälzlagerkäfig
- 6: innere Dichtung
- 7: innere Dichtung
- 8: Metallkern
- 9: Welle
- 10: Bord
- 11: Absatz
- 12: Aktorik
- 13: Schutzscheibe
- 14: Schnapphaken
- 15: Ausnehmung
- 16: Abschnitt
- 17: innerer Flanschabschnitt
- 18: Übergangsabschnitt
- 19: mittlerer Flanschabschnitt
- 20: äußerer Flanschabschnitt
- 21: Ringspalt

## Patentansprüche

1. Kupplungsdeckellager (1), ausgebildet als Schrägkugellager für eine Betätigungsvorrichtung einer Schalttrennkupplung, umfassend
- einen inneren Lagerring (2) und einen äußeren Lagerring (3),
- zwischen den Lagerringen (2,3) angeordnete Kugeln (4) als Wälzkörper,
- zwei zwischen den Lagerringen (2,3) in jeweils einer zur Symmetrieachse der Lagerringe (2,3) normalen Ebene angeordnete innere Dichtungen (6,7) unterschiedlichen Durchmessers,
- eine drehfest mit dem inneren Lagerring (2) verbundene Welle (9),
- eine der inneren Dichtung (6) kleineren Durchmessers vorgelagerte Schutzscheibe (13), welche drehfest mit der Welle (9) verbunden ist und die innere Dichtung (6) kleineren Durchmessers radial nach außen überragt, wobei ein Ringspalt (21) zwischen der Schutzscheibe (13) und dem äußeren Lagerring (3) gebildet ist.

2. Kupplungsdeckellager (1) nach Anspruch 1, **dadurch gekennzeichnet, dass** die Schutzscheibe (13) als Blechteil ausgebildet ist.

3. Kupplungsdeckellager (1) nach Anspruch 1 oder 2, **dadurch gekennzeichnet, dass** die inneren Dichtungen (6,7) als berührende Dichtungen ausgebildet sind.

4. Kupplungsdeckellager (1) nach einem der Ansprüche 1 bis 3, **dadurch gekennzeichnet, dass** die Schutzscheibe (13) in mindestens eine Ausnehmung (15) am Umfang der Welle (9) eingreifende Schnapphaken (14) aufweist.

5. Kupplungsdeckellager (1) nach Anspruch 4, **dadurch gekennzeichnet, dass** die Schnapphaken (14) einen sich in axialer Richtung, zum inneren Lagerring (2) hin, erstreckenden Abschnitt (16) aufweisen.

6. Kupplungsdeckellager (1) nach Anspruch 5, **dadurch gekennzeichnet, dass** die in Axialrichtung der Lagerringe (2,3) verlaufenden Abschnitte (16) der Schnapphaken (14) in einen inneren, in einer zu den Lagerringen (2,3) normalen Ebene liegenden, an einer Stirnseite (S1) des inneren Lagerrings (2) anliegenden Flanschabschnitt (17) der Schutzscheibe (13) übergehen.

7. Kupplungsdeckellager (1) nach Anspruch 6, **dadurch gekennzeichnet, dass** die Schutzscheibe (13) einen radial außerhalb des inneren Flanschabschnitts (17) angeordneten, zu diesem parallelen, von der Stirnseite (S1) des inneren Lagerrings (2) in Axialrichtung beabstandeten mittleren Flanschabschnitt (19) aufweist, welcher der inneren Dichtung (6) kleineren Durchmessers vorgelagert ist.

8. Kupplungsdeckellager (1) nach Anspruch 7, **dadurch gekennzeichnet, dass** die Schutzscheibe (13) einen den inneren Flanschabschnitt (17) mit dem mittleren Flanschabschnitt (19) verbindenden konischen Übergangsabschnitt (18) aufweist, welcher von der inneren Dichtung (6) kleineren Durchmessers in Axialrichtung beabstandet ist.

9. Kupplungsdeckellager (1) nach Anspruch 7 oder 8, **dadurch gekennzeichnet, dass** die Schutzscheibe (13) einen radial außerhalb des mittleren Flanschabschnitts (19) angeordneten, zu diesem parallelen äußeren Flanschabschnitt (20) aufweist, welcher axial zwischen dem inneren Flanschabschnitt (17) und dem mittleren Flanschabschnitt (19) angeordnet ist, wobei zwischen dem äußeren Flanschabschnitt (20) und der Stirnseite (S1) des äußeren Lagerrings (3) der Ringspalt (21) gebildet ist.

10. Verwendung eines Kupplungsdeckellagers (1) nach Anspruch 1 in einer Doppelkupplung.

## Claims

1. Clutch cover bearing (1), configured as an angular-contact ball bearing for an actuating apparatus of a disengaging clutch, comprising
- an inner bearing ring (2) and an outer bearing ring (3),
- balls (4) which are arranged between the bearing rings (2, 3) as rolling bodies,
- two inner seals (6, 7) of different diameter which are arranged between the bearing rings (2, 3) in in each case one plane which is perpendicular with respect to the axis of symmetry of the bearing rings (2, 3),
- a shaft (9) which is connected fixedly to the inner bearing ring (2) so as to rotate with it,
- a protective disc (13) which is positioned in front of the inner seal (6) of smaller diameter, is connected fixedly to the shaft (9) so as to rotate with it, and protrudes radially to the outside beyond the inner seal (6) of smaller diameter, an annular gap (21) being formed between the protective disc (13) and the outer bearing ring (3).

2. Clutch cover bearing (1) according to Claim 1, **characterized in that** the protective disc (13) is configured as a sheet-metal part.

3. Clutch cover bearing (1) according to Claim 1 or 2, **characterized in that** the inner seals (6, 7) are configured as touching seals.

4. Clutch cover bearing (1) according to one of Claims 1 to 3, **characterized in that** the protective disc (13) has snap-action hooks (14) which engage into at least one recess (15) on the circumference of the shaft (9).

5. Clutch cover bearing (1) according to Claim 4, **characterized in that** the snap-action hooks (14) have a section (16) which extends in the axial direction towards the inner bearing ring (2).

6. Clutch cover bearing (1) according to Claim 5, **characterized in that** those sections (16) of the snap-action hooks (14) which run in the axial direction of the bearing rings (2, 3) merge into an inner flange section (17) of the protective disc (13), which flange section (17) lies in a plane which is perpendicular with respect to the bearing rings (2, 3) and bears against an end side (S1) of the inner bearing ring (2).

7. Clutch cover bearing (1) according to Claim 6, **characterized in that** the protective disc (13) has a central flange section (19) which is arranged radially outside the inner flange section (17), is parallel to the latter, is spaced apart in the axial direction from the end side (S1) of the inner bearing ring (2), and is positioned in front of the inner seal (6) of smaller diameter.

8. Clutch cover bearing (1) according to Claim 7, **characterized in that** the protective disc (13) has a conical transition section (18) which connects the inner flange section (17) to the central flange section (19) and is spaced apart in the axial direction from the inner seal (6) of smaller diameter.

9. Clutch cover bearing (1) according to Claim 7 or 8, **characterized in that** the protective disc (13) has an outer flange section (20) which is arranged radially outside the central flange section (19), is parallel to the latter, and is arranged axially between the inner flange section (17) and the central flange section (19), the annular gap (21) being formed between the outer flange section (20) and the end side (S1) of the outer bearing ring (3).

10. Use of a clutch cover bearing (1) according to Claim 1 in a double clutch.

## Revendications

1. Palier de couvercle d'embrayage (1), réalisé sous forme de roulement à billes oblique pour un dispositif d'actionnement d'un embrayage de séparation, comprenant
- une bague de palier intérieure (2) et une bague de palier extérieure (3),
- des billes (4) disposées entre les bagues de palier (2, 3) en tant que corps de roulement,
- deux joints intérieurs (6, 7) de diamètre différent disposés entre les bagues de palier (2, 3) respectivement dans un plan normal à l'axe de symétrie des bagues de palier (2, 3),
- un arbre (9) calé en rotation avec la bague de palier intérieure (2),
- un disque de protection (13) monté devant le joint intérieur (6) de plus petit diamètre, qui est calé en rotation avec l'arbre (9) et qui dépasse radialement vers l'extérieur le joint intérieur (6) de plus petit diamètre, dans lequel une fente annulaire (21) est formée entre le disque de protection (13) et la bague de palier extérieure (3).

2. Palier de couvercle d'embrayage (1) selon la revendication 1, **caractérisé en ce que** le disque de protection (13) est formé par une pièce de tôle.

3. Palier de couvercle d'embrayage (1) selon la revendication 1 ou 2, **caractérisé en ce que** les joints intérieurs (6, 7) sont réalisés sous forme de joints qui se touchent.

4. Palier de couvercle d'embrayage (1) selon l'une quelconque des revendications 1 à 3, **caractérisé en ce que** le disque de protection (13) présente des crochets d'encliquetage (14) s'engageant dans au moins un évidement (15) à la périphérie de l'arbre (9).

5. Palier de couvercle d'embrayage (1) selon la revendication 4, **caractérisé en ce que** les crochets d'encliquetage (14) présentent une partie (16) s'étendant en direction axiale vers la bague de palier intérieure (2).

6. Palier de couvercle d'embrayage (1) selon la revendication 5, **caractérisé en ce que** les parties (16) des crochets d'encliquetage (14) s'étendant dans la direction axiale des bagues de palier (2, 3) se prolongent en une partie de bride intérieure (17) du disque de protection (13) située dans un plan normal aux bagues de palier (2, 3) et appliquée contre un côté frontal (S1) de la bague de palier intérieure (2).

7. Palier de couvercle d'embrayage (1) selon la revendication 6, **caractérisé en ce que** le disque de protection (13) présente une partie de bride médiane (19) disposée radialement à l'extérieur de la partie de bride intérieure (17), parallèle à celle-ci et espacée en direction axiale du côté frontal (S1) de la bague de palier intérieure (2), et qui est montée devant le joint intérieur (6) de plus petit diamètre.

8. Palier de couvercle d'embrayage (1) selon la revendication 7, **caractérisé en ce que** le disque de protection (13) présente une partie de transition conique (18) reliant la partie de bride intérieure (17) à la partie de bride médiane (19), qui est espacée en direction axiale du joint intérieur (6) de plus petit diamètre.

9. Palier de couvercle d'embrayage (1) selon la revendication 7 ou 8, **caractérisé en ce que** le disque de protection (13) présente une partie de bride extérieure (20), disposée radialement à l'extérieur de la partie de bride médiane (19) et parallèle à celle-ci, qui est disposée axialement entre la partie de bride intérieure (17) et la partie de bride médiane (19), dans lequel la fente annulaire (21) est formée entre la partie de bride extérieure (20) et le côté frontal (S1) de la bague de palier extérieure (3).

10. Utilisation d'un palier de couvercle d'embrayage (1) selon la revendication 1 dans un double embrayage.
